(19) Europäisches Patentamt

European Patent Office

Office européen des brevets

(11) EP 4 738 692 A1

(12) EUROPEAN PATENT APPLICATION

(43) Date of publication:
06.05.2026 Bulletin 2026/19

(21) Application number: 24210508.8

(22) Date of filing: 04.11.2024

(51) International Patent Classification (IPC):
H02P 21/05 (2006.01)        H02P 23/04 (2006.01)

(52) Cooperative Patent Classification (CPC):
H02P 21/05; H02P 23/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ABB SCHWEIZ AG
5400 Baden (CH)

(72) Inventor: Holopainen, Timo
00380 Helsinki (FI)

(74) Representative: Kolster Oy Ab
Salmisaarenaukio 1
P.O. Box 204
00181 Helsinki (FI)

(54) **A METHOD, AN ARRANGEMENT AND A FREQUENCY CONVERTER FOR CONTROLLING VIBRATION OF A SLEEVE BEARING VFD MOTOR**

(57) The present invention relates to the field of electric drive devices and sleeve bearing VFD motors, such as electric motors and electric generators for industrial applications, and more particularly to a method, an arrangement and a frequency converter for controlling vibration of a sleeve bearing VFD motor. The arrangement of the present invention for controlling vibration of a sleeve bearing VFD motor comprises a frequency converter (11), one or more vibration sensors (17-18, 91) and a sleeve bearing VFD motor (12), said one or more vibration sensors (17-18, 91) comprising one or more vibration sensors (17-18, 91) of said sleeve bearing VFD motor (12), wherein said one or more vibration sensors (17-18, 91) is/are arranged for measuring at least horizontal vibration from said sleeve bearing VFD motor and for producing measured vibration data; and wherein said frequency converter (11) is arranged for generating a control torque and for exerting said control torque on the stator of said sleeve bearing VFD motor (12) for controlling vibration of said sleeve bearing VFD motor (12), said control torque being determined utilizing said measured vibration data.

Fig. 4

EP 4 738 692 A1

**Description**

FIELD OF THE INVENTION

The present invention relates to the field of electric drive devices and electric machines, such as electric motors and electric generators for industrial applications, and more particularly to a method, an arrangement and a frequency converter for controlling vibration of a sleeve bearing VFD motor.

BACKGROUND OF THE INVENTION

Electric drive arrangements are widely used for industrial applications, e.g. for providing and controlling electrical power and energy to various public and industrial applications as well as for driving and controlling various public and industrial applications. Electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry.

Electric drives for electric machines, such as for electric motors and electric generators, may be divided into DC drives (DC, direct current) and AC drives (AC, alternating current). E.g. in a DC motor of a DC drive, a magnetic field is generated by the current through the field winding in the stator. This magnetic field is always maintained at right angles to the field generated by the armature winding. In this way, a DC motor's torque is generated, which torque can then be easily controlled in a DC drive by changing the armature current and keeping the magnetizing current constant. In a DC drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor or generator can be controlled, whereas in frequency controlled AC drives the driven machine dictates the torque level.

The avoidance of resonances strongly affects the structural design of large electric motors or generators. Traditionally, the dimensions of critical structural members are adjusted to fulfil this resonance criterion. There are some methods to decrease the excitation forces and increase damping of the bearings. Only in some exceptional cases, additional damping elements have been introduced to control vibrations of the lowest modes, i.e. the lowest natural frequencies.

In electric machines, the foundations of the electric machine may vary significantly. Avoidance of resonances is usually the main design principle related to the motor vibrations. If foundation properties of the motor are known in site conditions, the vibration behaviour can be predicted, and the potential risks identified. In some cases, the corrective actions can be achieved by well-defined structural arrangements.

In some cases, resonances can be avoided by separating the critical speeds, such as natural frequencies, from the operating speed range of the motor. However, the natural frequencies of the foundation system may differ a lot depending on the on-site conditions. The main difference is the change of natural frequencies as they are strongly affected by the flexible foundation. Occasionally but not every time, some harmful resonance vibrations are observed during the commissioning and operation of sleeve bearing VFD motors. However, the avoidance of all resonances is very difficult to achieve due to the variation of motor foundations on site and due to the large operating speed range of many VFD motors (VFD, variable frequency drive).

All motors, such as variable frequency drive controlled motors, i.e. VFD motors, can be divided to sub-critical and super-critical designs. In sub-critical design, the natural frequency of the first bending mode of the rotor, i.e., critical speed, is above the operating speed, and in the super-critical design vice versa. The sub-critical design is usually preferred, but with increasing speeds and power the transition to super-critical designs is unavoidable.

In practice, the super-critical design demands sleeve bearings. In VFD motors the sleeve bearings offer better damping characteristics than antifriction bearings. With sleeve bearing VFD motors this damping is needed to cross the critical speeds during start-ups and coast-downs.

For direct-on-line motors, a thumb rule tells that the transition is justified in two-pole motors (3000 rpm) when the power is about 1-2 MW. With variable frequency drive controlled motors the sub-critical design is preferred for higher speeds and powers (up to 5 MW), because typically the aim is a resonance-free operating speed-range. However, this sub-critical design brings some drawbacks like additional costs and larger windage losses. In addition, the sub-critical operation on site with a sub-critical motor necessitates that the foundation is stiff enough.

An additional challenge related to the critical speeds is caused by the motor foundation on site. These foundations are sometimes very stiff reinforced concrete blocks and sometimes flexible steel skids. Unfortunately, the site foundation affects remarkably on the critical speeds. Fundamentally, the feasible speed range of a VFD motor is limited by the critical speeds and these critical speeds cannot be reliably predicted before the commissioning.

Thus, the technological limitations of sub-critical sleeve bearing motors together with unknown site conditions leads to unused potential of VFD motors due to critical speeds.

In today's demanding environment, there is a need for a more efficient and easier solution for a method, an arrangement and a frequency converter for controlling vibration of a sleeve bearing VFD motor, which solution would enable the use of a sleeve bearing VFD motor in at least some critical speeds, and which solution would enable super-critical design of a sleeve bearing VFD motor. There is a demand in the market for a method, an arrangement and a frequency converter for controlling vibration of a sleeve bearing VFD motor that would allow a broader use than the current prior art solutions.

BRIEF DESCRIPTION OF THE INVENTION

The object of the invention is to introduce a method, an arrangement and a frequency converter for controlling vibration of a sleeve bearing VFD motor, which solution would enable the use of a sleeve bearing VFD motor in at least some critical speeds, and which solution would enable super-critical design of a sleeve bearing VFD motor. Advantageous embodiments are furthermore presented.

It is brought forward a new method for controlling vibration of a sleeve bearing VFD motor, in which method: at least horizontal vibration from said sleeve bearing VFD motor is measured by one or more vibration sensors as measured vibration data, said one or more vibration sensors comprising one or more vibration sensors of said sleeve bearing VFD motor; control torque is determined utilizing said measured vibration data; and control torque is generated by said frequency converter and exerted on the stator of said sleeve bearing VFD motor for controlling vibration of said sleeve bearing VFD motor.

In a preferred embodiment of said method, horizontal vibration and vertical vibration from said sleeve bearing VFD motor is measured by one or more vibration sensors as measured vibration data.

In a preferred embodiment of said method, in generating said control torque: a control torque reference is calculated by said frequency converter; and control torque is generated by said frequency converter corresponding to said control torque reference.

In a preferred embodiment of said method, said measured vibration data is utilized for suppression of vibration of said sleeve bearing VFD motor at least at the low frequency critical speed frequency area/areas.

Furthermore, it is brought forward a new arrangement for controlling vibration of a sleeve bearing VFD motor, said arrangement comprising a frequency converter, one or more vibration sensors and a sleeve bearing VFD motor, said one or more vibration sensors comprising one or more vibration sensors of said sleeve bearing VFD motor, wherein said one or more vibration sensors is/are arranged for measuring at least horizontal vibration from said sleeve bearing VFD motor and for producing measured vibration data; and wherein said frequency converter is arranged for generating a control torque and for exerting said control torque on the stator of said sleeve bearing VFD motor or controlling vibration of said sleeve bearing VFD motor, said control torque being determined utilizing said measured vibration data.

In a preferred embodiment of said arrangement, said one or more vibration sensors is/are arranged for measuring horizontal vibration and vertical vibration from said sleeve bearing VFD motor and for producing measured vibration data.

In a preferred embodiment of said arrangement, in generating said control torque: a control torque reference is calculated by said frequency converter; and control torque is generated by said frequency converter corresponding to said control torque reference.

In a preferred embodiment of said arrangement, said measured vibration data is utilized for suppression of vibration of said sleeve bearing VFD motor at least at the low frequency critical speed frequency area/areas.

In a preferred embodiment of said arrangement, said frequency converter comprises: a data gathering unit arranged for gathering data, said gathered data including control data for said sleeve bearing VFD motor and measured vibration data of said sleeve bearing VFD motor; and a data analysis unit arranged for analysing said gathered data and for determining the control torque for controlling vibration of said sleeve bearing VFD motor.

In a preferred embodiment, said arrangement comprises a data analysis system, and wherein said frequency converter comprises: a data gathering unit arranged for gathering data, said gathered data including control data for said sleeve bearing VFD motor and measured vibration data of said sleeve bearing VFD motor; and a connection unit arranged for transmitting said gathered data to said data analysis system, wherein said data analysis system is arranged for analysing said gathered data and for determining the control torque for controlling vibration of said sleeve bearing VFD motor.

In a preferred embodiment, said arrangement comprises a user apparatus, and wherein said connection unit arranged for transmitting said gathered data to said data analysis system via said user apparatus, and wherein said user apparatus is arranged for receiving measured vibration data of said sleeve bearing VFD motor from said one or more vibration sensors and for receiving said gathered data from said connection unit and for forwarding said gathered data to said data analysis system.

Furthermore, it is brought forward a new frequency converter for controlling vibration of a sleeve bearing VFD motor, which frequency converter is arranged: to receive vibration data from one or more vibration sensors arranged for measuring at least horizontal vibration from said sleeve bearing VFD motor and for producing measured vibration data, said one or more vibration sensors comprising one or more vibration sensors of said sleeve bearing VFD motor; and to generate a control torque for exerting said control torque on the stator of said sleeve bearing VFD motor for controlling vibration of said sleeve bearing VFD motor, said control torque being determined utilizing said measured vibration data.

In a preferred embodiment of said frequency converter, said one or more vibration sensors is/are arranged for measuring horizontal vibration and vertical vibration from said sleeve bearing VFD motor and for producing measured vibration data.

In a preferred embodiment of said frequency converter, in generating said control torque: a control torque reference is calculated by said frequency converter; and control torque is generated by said frequency converter corresponding to said control torque reference.

In a preferred embodiment, said frequency converter comprises a data gathering unit arranged for gathering data, said gathered data including control data for said sleeve bearing VFD motor and measured vibration data of said sleeve bearing VFD motor; and a data analysis unit arranged for analysing said gathered data and for determining the control torque for controlling vibration of said sleeve bearing VFD motor.

BRIEF DESCRIPTION OF THE DRAWINGS

In the following, the present invention will be described in more detail by way of example and with reference to the attached drawings, in which:

Figure 1 illustrates a block diagram of an embodiment of an arrangement for controlling vibration of a sleeve bearing VFD motor according to the present invention.
Figure 2 shows an exemplary embodiment of a rotor of a sleeve bearing VFD motor according to the present invention.
Figure 3A illustrates one example of phase versus rotation speed in one embodiment of a calculated static unbalance response for G2.5 residual unbalance of a rotor of a sleeve bearing VFD motor according to the present invention.
Figure 3B illustrates one example of vibration velocity versus rotation speed in one embodiment of a calculated static unbalance response for G2.5 residual unbalance of a rotor of a sleeve bearing VFD motor according to the present invention.
Figure 4 illustrates an exemplary embodiment of a rotor of a sleeve bearing VFD motor according to the present invention rotating at a first critical speed.
Figure 5 illustrates an exemplary embodiment of a rotor of a sleeve bearing VFD motor according to the present invention rotating at a second critical speed.
Figure 6 illustrates an exemplary embodiment of a rotor of a sleeve bearing VFD motor according to the present invention rotating at a third critical speed.
Figure 7A illustrates one exemplary embodiment of rotor bearing stiffness versus rotation speed in the drive end of a rotor embodiment of a sleeve bearing VFD motor according to the present invention.
Figure 7B illustrates one exemplary embodiment of rotor bearing damping versus rotation speed in the drive end of a rotor embodiment of a sleeve bearing VFD motor according to the present invention.
Figure 8A illustrates one exemplary embodiment of rotor bearing stiffness versus rotation speed in the non-drive end of a rotor embodiment of a sleeve bearing VFD motor according to the present invention.
Figure 8B illustrates one exemplary embodiment of rotor bearing damping versus rotation speed in the non-drive end of a rotor embodiment of a sleeve bearing VFD motor according to the present invention.
Figure 9 illustrates a flow diagram of an embodiment of a method for controlling vibration of a sleeve bearing VFD motor according to the present invention.
Figure 10 illustrates a block diagram of another embodiment of an arrangement for controlling vibration of a sleeve bearing VFD motor according to the present invention.
Figure 11 illustrates a block diagram of a third embodiment of an arrangement for controlling vibration of a sleeve bearing VFD motor according to the present invention.
Figure 12 illustrates a block diagram of a fourth embodiment of an arrangement for controlling vibration of a sleeve bearing VFD motor according to the present invention.

The foregoing aspects, features and advantages of the invention will be apparent from the drawings and the detailed description related thereto.

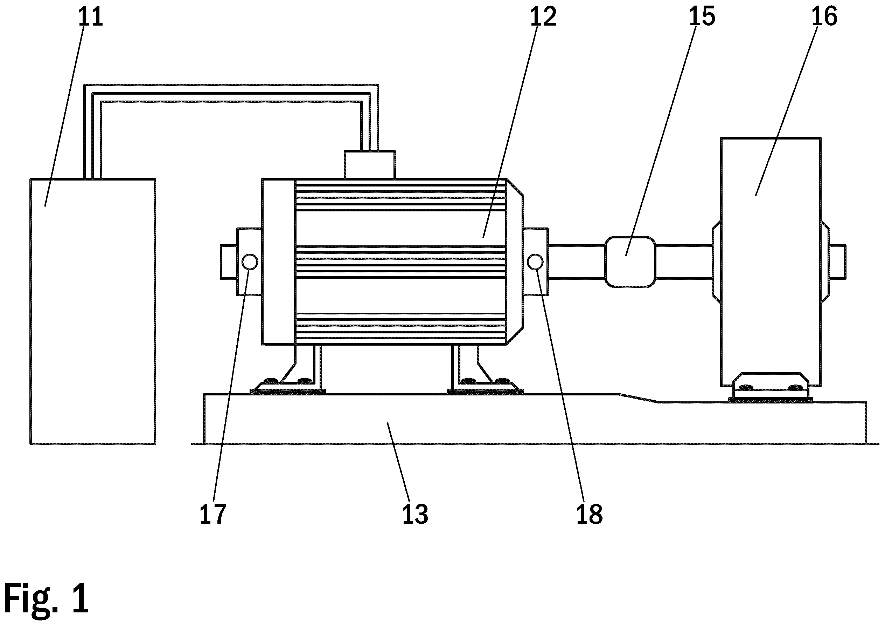

In the following, the invention will be described in greater detail by means of preferred embodiments with reference to the accompanying drawings of Figures 1 to 12.

DETAILED DESCRIPTION

The arrangement for controlling vibration of a sleeve bearing VFD motor comprises a frequency converter, one or more vibration sensors and a sleeve bearing VFD motor, said one or more vibration sensors comprising one or more vibration sensors of said sleeve bearing VFD motor, wherein said one or more vibration sensors is/are arranged for measuring at least horizontal vibration from said sleeve bearing VFD motor and for producing measured vibration data; and wherein said frequency converter is arranged for generating a control torque and for exerting said control torque on the stator of said sleeve bearing VFD motor for controlling vibration of said sleeve bearing VFD motor, said control torque being determined utilizing said measured vibration data.

As a VFD motor has been installed on site to a motor foundation, it is the foundation that affects remarkably the vibration of the rotor and the stator on the critical speeds. The vibration of the rotor may comprise orbital rotor vibration. The orbital rotor vibration may involve an orbital motion of the rotor, which orbital motion may practically take a form of any elliptical orbit ranging between a circular orbit and a very narrow elliptical orbit resembling a straight line.

Figure 1 illustrates a diagram of an embodiment of an arrangement for controlling vibration of a sleeve bearing VFD motor according to the present invention. The presented embodiment of an arrangement for controlling vibration of a sleeve bearing VFD motor comprises a frequency converter 11 and a sleeve bearing VFD motor 12. In the presented embodiment said sleeve bearing VFD motor 12 is installed on a motor foundation 13. In the presented embodiment, a driven machine system 16 is connected to said sleeve bearing VFD motor 12 via a coupling arrangement 15. Whereas in the presented embodiment a driven machine 16 connected to said sleeve bearing VFD motor 12 is shown, in another embodiment of the present invention the driven machine 16 could be replaced by one or more driven machine devices and/or one or more gears/ gear arrangements and/or one or more shafts/ shaft systems connected to said sleeve bearing VFD motor 12.

In the present invention, the arrangement for controlling vibration of a sleeve bearing VFD motor comprises a frequency converter 11, a sleeve bearing VFD motor 12, and one or more vibration sensors 17-18. Said one or more vibration sensors 17-18 may comprise one or more vibration sensors 17-18 attached to the sleeve bearings of said VFD motor 12.

In the presented embodiment, said arrangement for controlling vibration of a sleeve bearing VFD motor comprises one or more vibration sensors 17-18. Said one or more vibration sensors 17-18 may comprise sensors 17-18 installed on the VFD motor 12, close to the ends of the VFD motor 12, i.e. close to the sleeve bearings of the VFD motor 12.

Said one or more vibration sensors 17-18 may comprise sensors 17-18 located on the sleeve bearings. Said one or more vibration sensors 17-18 may comprise sensors 17-18 located on the sleeve bearings in axial position in the transversal center plane of the bearing journal, and in vertical position in the horizontal center plane of the bearing journal.

In the present invention, the vibration of a sleeve bearing VFD motor 12 is controlled using the frequency converter 11. In the presented embodiment, said one or more vibration sensors 17-18 measure at least horizontal vibration of the sleeve bearing VFD motor 12 as measured vibration data. In another embodiment, said one or more vibration sensors 17-18 may also measure horizontal vibration and vertical vibration of the sleeve bearing VFD motor 12 as measured vibration data. In the presented embodiment, the arrangement for controlling vibration of a sleeve bearing VFD motor 12 calculates and determines a control torque utilizing said measured vibration data. In the presented embodiment, said frequency converter 11 produces a control torque in addition to main torque, which control torque is a dynamic (time dependent) variable action torque exerted on the rotor for controlling vibration of a sleeve bearing VFD motor. In the presented embodiment, the active parts of the sleeve bearing VFD motor function as an actuator controlling the vibration of a sleeve bearing VFD motor.

The components of this active vibration control system are: a) vibration sensors mounted on the bearings, b) frequency converter to produce harmonic torque components in addition to main torque, c) active parts of the motor functioning as an actuator, and d) control system to define control torque based on the measured vibrations.

In the presented embodiment of an arrangement for controlling vibration of a sleeve bearing VFD motor according to the present invention, vibration is measured from the sleeve bearing VFD motor by one or more vibration sensors 17-18. When the vibration from the motor is measured, as a result measured vibration data is produced.

Thereafter, a control torque is calculated and determined utilizing said measured vibration data. The calculated control torque used for vibration control varies in time and is a time-dependent function of measured vibrations. After the control torque has been calculated and determined, a respective control torque is generated by the frequency converter 11 and said generated control torque is exerted on the stator of said sleeve bearing VFD motor 12. In the method according to an embodiment, the control torque generated 23 by the frequency converter 11 is exerted on the stator of the sleeve bearing VFD motor 12. In an embodiment of an arrangement the control torque is utilized, at least, to control the vibration at the low frequency critical speed frequency area/areas for suppression of the vibration.

In the calculation and determination of said control torque a control torque reference is first calculated by said frequency converter 11 and thereafter a respective control torque is generated by said frequency converter 11 corresponding to said control torque reference. Said control torque reference may be added as an input reference on a torque controller or a torque control loop of said frequency converter 11. Thereafter, the stator voltage of said sleeve bearing VFD motor 12, supplied and controlled by the said frequency converter 11, is arranged to produce a torque to the shaft of said sleeve bearing VFD motor 12 which corresponds to said input reference of torque controller.

In the presented embodiment of an arrangement for controlling vibration of a sleeve bearing VFD motor according to the present invention, the control torque generated by the frequency converter 11 is exerted on the stator and used for production of horizontal motion for controlling vibration of a sleeve bearing VFD motor.

In the presented embodiment of an arrangement for controlling vibration of a sleeve bearing VFD motor according to the present invention, in addition to the main torque there is a dynamic (time dependent) variable action torque exerted on the rotor for controlling vibration. The variable action torque causes a variable control torque as a static by-product, which is achieved by a variable action torque exerted on the rotor. This control torque can be used to produce a variation of horizontal displacement of the motor that can be utilized for controlling vibration of a sleeve bearing VFD motor.

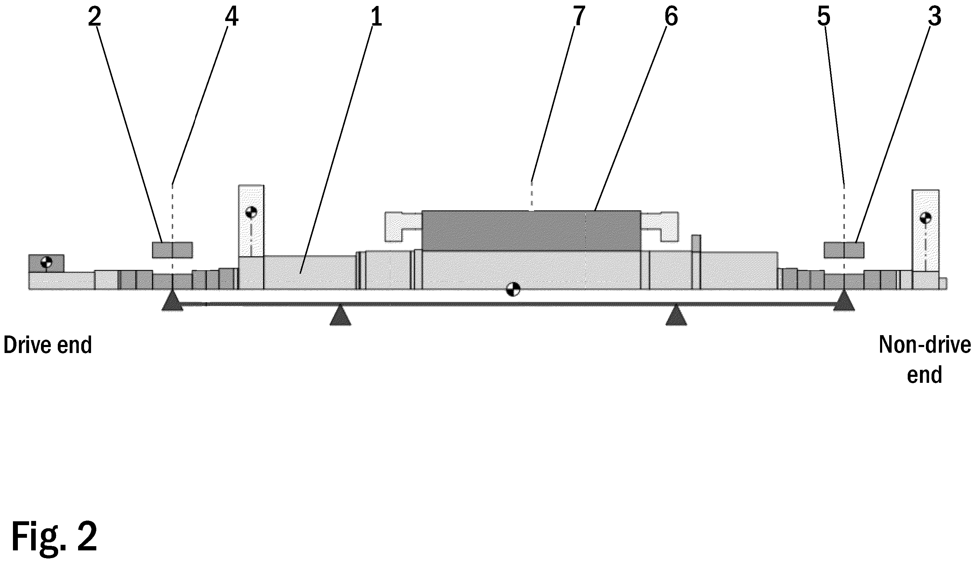

Figure 2 shows an exemplary embodiment of a rotor of a sleeve bearing VFD motor according to the present invention. In Figure 2 the rotor 1 of the sleeve bearing VFD motor is shown cut in half along the rotor axis. In the exemplary embodiment of Figure 2 the drive end of the rotor 1 of the sleeve bearing VFD motor is to the left and the non-drive end of the rotor 1 is to the right. The sleeve bearings of the VFD motor are marked with reference numbers 2, 3. The position of the drive end sleeve bearing 2 is marked with a reference number 4. Respectively, the position of the non-drive end sleeve bearing 3 is marked with a reference number 5. The core of the rotor 1 of the sleeve bearing VFD motor is marked with a reference number 6. The center position of the core of the rotor core 6 of the sleeve bearing VFD motor is marked with a reference number 7.

Balance quality grades G have been established that allow to classify the requirements of the level of permissible residual unbalance for the rotor type which guarantees its satisfactory operation. In G2.5 balance quality grade the indicated maximum allowable vibration velocity of a rotating workpiece is 2.5 mm/s RMS.

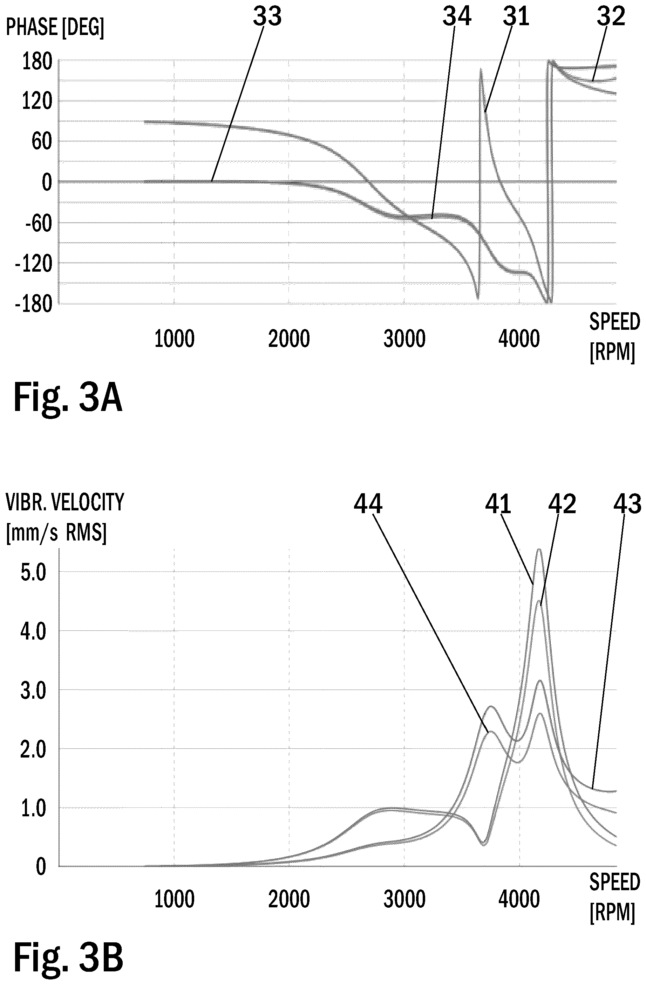

Figure 3A illustrates one example of phase versus rotation speed in one embodiment of a calculated static unbalance response for G2.5 residual unbalance of a rotor of a sleeve bearing VFD motor according to the present invention. In Figure 3A the calculated static vertical unbalance response phase in the non-drive end is marked with a reference number 31. Respectively, the calculated static vertical unbalance response phase in the drive end is marked with a reference number 32. The calculated static vertical unbalance response phase in the non-drive end 31 is somewhat identical to the calculated static vertical unbalance response phase in the drive end 32, except in the rotation speed over 4200 RPM.

Furthermore, in Figure 3A the calculated static horizontal unbalance response phase in the non-drive end is marked with a reference number 33. Respectively, the calculated static horizontal unbalance response phase in the drive end is marked with a reference number 34. The calculated static horizontal unbalance response phase in the non-drive end 33 is somewhat identical to the calculated static horizontal unbalance response phase in the drive end 34.

Figure 3B illustrates one example of vibration velocity versus rotation speed in one embodiment of a calculated static unbalance response for G2.5 residual unbalance of a rotor of a sleeve bearing VFD motor according to the present invention. In Figure 3B the calculated static vertical unbalance response vibration velocity in the non-drive end is marked with a reference number 41. Respectively, the calculated static vertical unbalance response vibration velocity in the drive end is marked with a reference number 42.

Furthermore, in Figure 3B the calculated static horizontal unbalance response vibration velocity in the non-drive end is marked with a reference number 43. Respectively, the calculated static horizontal unbalance response vibration velocity in the drive end is marked with a reference number 44.

From the calculated static unbalance responses of Figures 3A and 3B the first, the second and the third critical speed can be detected, i.e. 2667 RPM as the first critical speed, 3737 RPM as the second critical speed, and 4177 RPM as the third critical speed.

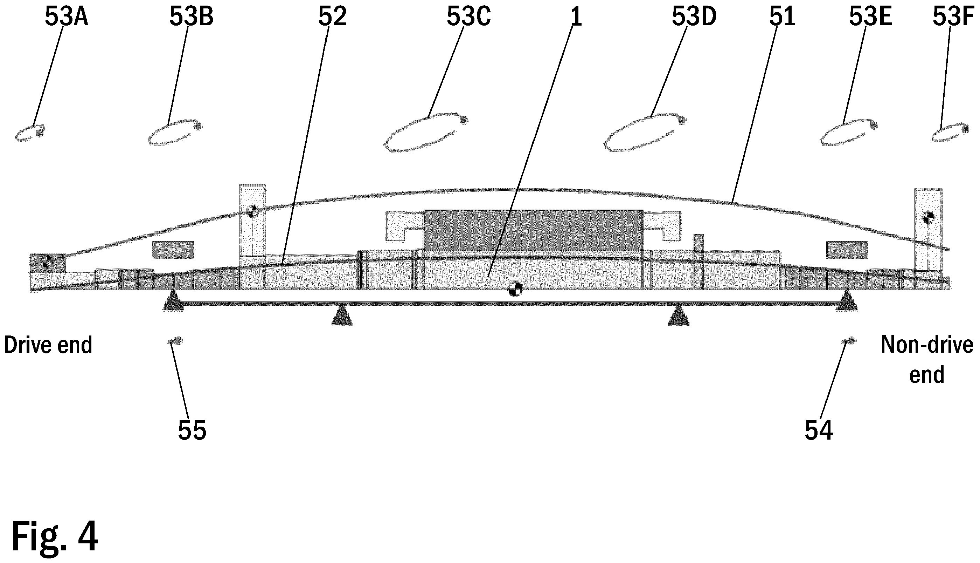

Figure 4 illustrates an exemplary embodiment of a rotor of a sleeve bearing VFD motor according to the present invention rotating at a first critical speed. In Figure 4 the rotor 1 of the sleeve bearing VFD motor is shown cut in half along the rotor axis, and the drive end of the rotor 1 of the sleeve bearing VFD motor is to the left, and the non-drive end of the rotor 1 is to the right.

In Figure 4 the first critical speed is 2667 RPM, and the amplification factor is 3.4. The horizontal mode shape at the first critical speed as seen from a top view is indicated with a graph 51. Respectively, the vertical mode shape at the first critical speed as seen from a side view is indicated with a graph 52. The orbits showing the orbital rotor vibration at the first critical speed are marked with reference numbers 53A-53F. Furthermore, the bearing housing orbits showing the orbital vibration of the bearing housing at the first critical speed are marked with reference numbers 54, 55, i.e. the bearing housing orbit 54 in the non-drive end at the first critical speed, and the bearing housing orbit 55 in the drive end at the first critical speed.

The bearing housing orbits 54, 55 show that there are clear horizontal components. In addition, the bearing housing orbits 54, 55 show that the orbital motion of both ends is in the same phase, i.e. in rotor-foundation mode. This means that the reactive torque can be used for controlling all these modes.

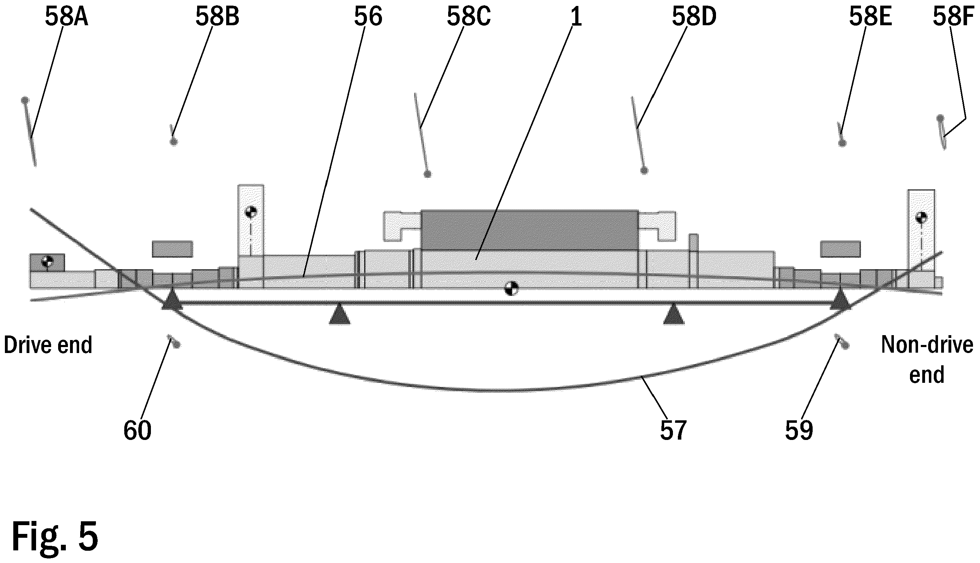

Figure 5 illustrates an exemplary embodiment of a rotor of a sleeve bearing VFD motor according to the present invention rotating at a second critical speed. In Figure 5 the rotor 1 of the sleeve bearing VFD motor is shown cut in half along the rotor axis, and the drive end of the rotor 1 of the sleeve bearing VFD motor is to the left, and the non-drive end of the rotor 1 is to the right.

In Figure 5 the second critical speed is 3737 RPM, and the amplification factor is 11.6. The horizontal mode shape at the second critical speed as seen from a top view is indicated with a graph 56. Respectively, the vertical mode shape at the second critical speed as seen from a side view is indicated with a graph 57. The orbits showing the orbital rotor vibration at the second critical speed are marked with reference numbers 58A-58F. Furthermore, the bearing housing orbits showing the orbital vibration of the bearing housing at the second critical speed are marked with reference numbers 59, 60, i.e. the bearing housing orbit 59 in the non-drive end at the second critical speed, and the bearing housing orbit 60 in the drive end at the second critical speed.

The bearing housing orbits 59, 60 show that there are clear horizontal components. In addition, the bearing housing orbits 59, 60 show that the orbital motion of both ends is in the same phase, i.e. in rotor-foundation mode. This means that the reactive torque can be used for controlling all these modes.

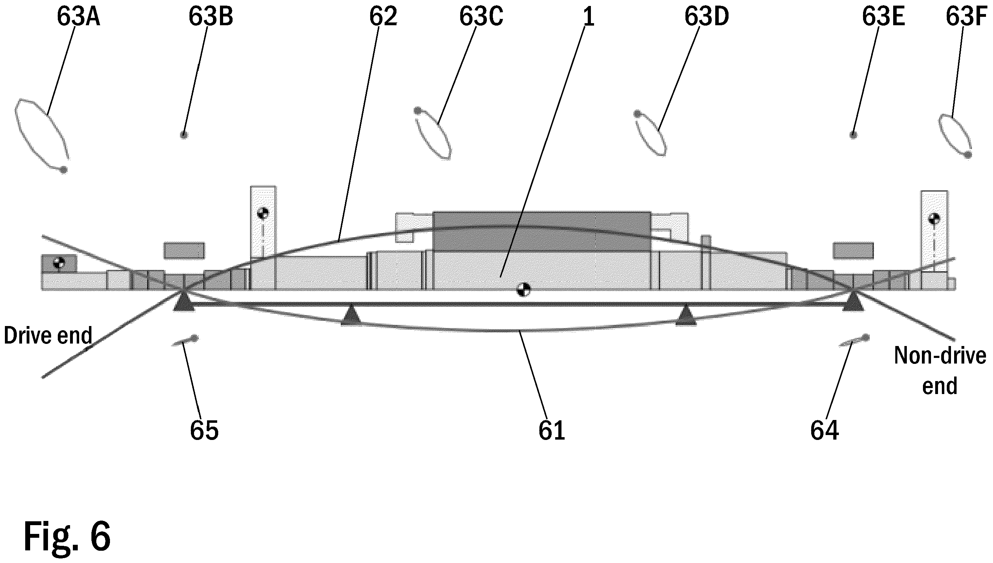

Figure 6 illustrates an exemplary embodiment of a rotor of a sleeve bearing VFD motor according to the present invention rotating at a third critical speed. In Figure 6 the rotor 1 of the sleeve bearing VFD motor is shown cut in half along the rotor axis, and the drive end of the rotor 1 of the sleeve bearing VFD motor is to the left, and the non-drive end of the rotor 1 is to the right.

In Figure 6 the third critical speed is 4177 RPM, and the amplification factor is 22.8. The horizontal mode shape at the third critical speed as seen from a top view is indicated with a graph 61. Respectively, the vertical mode shape at the third critical speed as seen from a side view is indicated with a graph 62. The orbits showing the orbital rotor vibration at the third critical speed are marked with reference numbers 63A-63F. Furthermore, the bearing housing orbits showing the orbital vibration of the bearing housing at the third critical speed are marked with reference numbers 64, 65, i.e. the bearing housing orbit 64 in the non-drive end at the third critical speed, and the bearing housing orbit 65 in the drive end at the third critical speed.

The bearing housing orbits 64, 65 show that there are clear horizontal components. In addition, the bearing housing orbits 64, 65 show that the orbital motion of both ends is in the same phase, i.e. in rotor-foundation mode. This means that the reactive torque can be used for controlling all these modes.

The dynamic property parameters of a rotor bearing arrangement are typically described by rotor bearing dynamic coefficient matrices K and C, i.e. by rotor bearing stiffness coefficient matrix K and rotor bearing damping coefficient matrix C. Rotor bearing stiffness coefficient matrix K is defined by Equation 1 as:

$$\boldsymbol{K} = \begin{bmatrix} K_{xx} & K_{xy} \\ K_{yx} & K_{yy} \end{bmatrix} \tag{1}$$

Respectively, rotor bearing damping coefficient matrix C is defined by Equation 2 as:

$$\boldsymbol{C} = \begin{bmatrix} C_{xx} & C_{xy} \\ C_{yx} & C_{yy} \end{bmatrix} \tag{2}$$

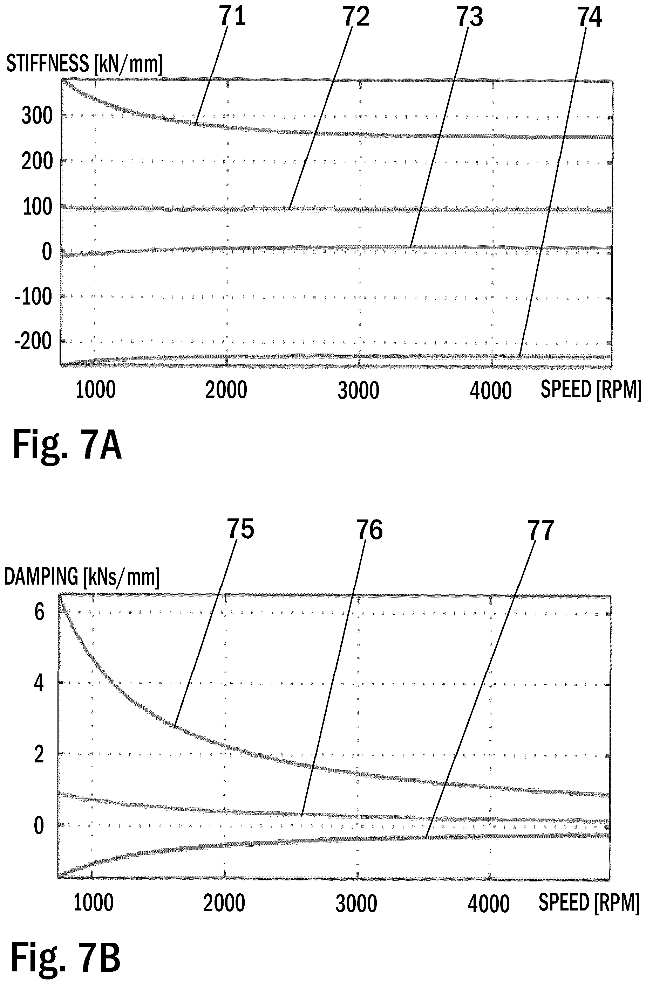

Figure 7A illustrates one exemplary embodiment of rotor bearing stiffness versus rotation speed in the drive end of a rotor embodiment of a sleeve bearing VFD motor according to the present invention. In Figure 7A the vertical rotor bearing stiffness coefficient $K_{yy}$ in the drive end of a rotor embodiment is marked with a reference number 71. Respectively, the horizontal rotor bearing stiffness coefficient $K_{xx}$ is marked with a reference number 72. Furthermore, the first cross-coupled rotor bearing stiffness coefficient $K_{xy}$ is marked with a reference number 73 and the second cross-coupled rotor bearing stiffness coefficient $K_{yx}$ is marked with a reference number 74.

As can be seen in Figure 7A the first cross-coupled rotor bearing stiffness coefficient $K_{xy}$ 73 is clearly different from the second cross-coupled rotor bearing stiffness coefficient $K_{yx}$ 74 this skew-symmetric rotor bearing stiffness coefficient matrix **K** clearly indicating asymmetry of the rotor-frame system.

Figure 7B illustrates one exemplary embodiment of rotor bearing damping versus rotation speed in the drive end of a rotor embodiment of a sleeve bearing VFD motor according to the present invention. In Figure 7B the vertical rotor bearing damping coefficient $C_{yy}$ in the drive end of a rotor embodiment is marked with a reference number 75. Respectively, the horizontal rotor bearing damping coefficient $C_{xx}$ is marked with a reference number 76. Furthermore, the first cross-coupled rotor bearing damping coefficient $C_{xy}$ and the second cross-coupled rotor bearing damping coefficient $C_{yx}$ both follow the same curve and are thus both marked with a reference number 77.

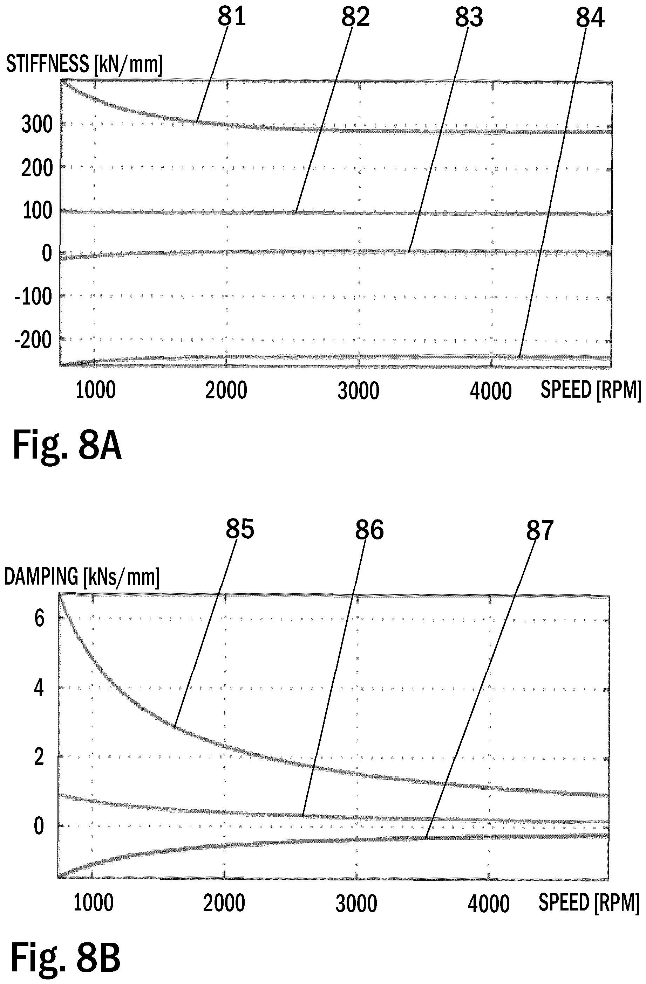

Figure 8A illustrates one exemplary embodiment of rotor bearing stiffness versus rotation speed in the non-drive end of a rotor embodiment of a sleeve bearing VFD motor according to the present invention. In Figure 8A the vertical rotor bearing stiffness coefficient $K_{yy}$ in the non-drive end of a rotor embodiment is marked with a reference number 81. Respectively, the horizontal rotor bearing stiffness coefficient $K_{xx}$ is marked with a reference number 82. Furthermore, the first cross-coupled rotor bearing stiffness coefficient $K_{xy}$ is marked with a reference number 83 and the second cross-coupled rotor bearing stiffness coefficient $K_{yx}$ is marked with a reference number 84.

As can be seen in Figure 8A the first cross-coupled rotor bearing stiffness coefficient $K_{xy}$ 83 is clearly different from the second cross-coupled rotor bearing stiffness coefficient $K_{yx}$ 84 this skew-symmetric rotor bearing stiffness coefficient matrix **K** clearly indicating asymmetry of the rotor-frame system.

Figure 8B illustrates one exemplary embodiment of rotor bearing damping versus rotation speed in the non-drive end of a rotor embodiment of a sleeve bearing VFD motor according to the present invention. In Figure 8B the vertical rotor bearing damping coefficient $C_{yy}$ in the non-drive end of a rotor embodiment is marked with a reference number 85. Respectively, the horizontal rotor bearing damping coefficient $C_{xx}$ is marked with a reference number 86. Furthermore, the first cross-coupled rotor bearing damping coefficient $C_{xy}$ and the second cross-coupled rotor bearing damping coefficient $C_{yx}$ both follow the same curve and are thus both marked with a reference number 87.

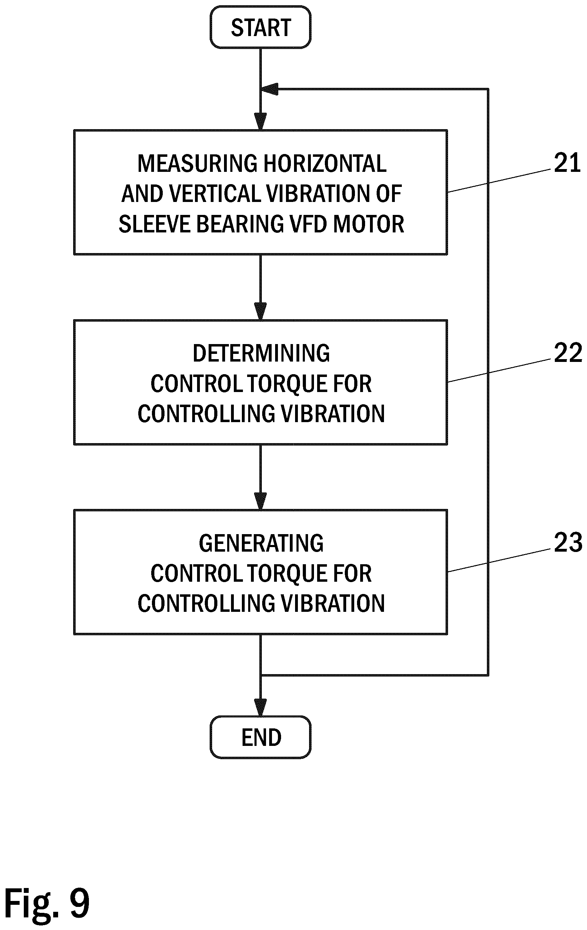

Figure 9 illustrates a flow diagram of an embodiment of a method for controlling vibration of a sleeve bearing VFD motor according to the present invention. In the method according to the present embodiment, horizontal vibration is measured 21 from the sleeve bearing VFD motor by one or more vibration sensors 17-18. When the horizontal vibration from the sleeve bearing VFD motor is measured 21, as a result measured vibration data is produced. In the method according to another embodiment, horizontal vibration and vertical vibration is measured 21 from the sleeve bearing VFD motor by one or more vibration sensors 17-18. Accordingly, when the horizontal vibration and vertical vibration from the sleeve bearing VFD motor is measured 21, as a result measured vibration data is produced.

As the next step, a control torque for controlling vibration is calculated and determined 22 utilizing said measured vibration data. In the calculation and determination of said control torque a control torque reference is first calculated by said frequency converter 11 and thereafter a respective control torque signalling is generated by said frequency converter 11 corresponding to said control torque reference. Said control torque reference may be added as an input reference on a torque controller or a torque control loop of said frequency converter 11. Thereafter, the stator voltage of the sleeve bearing VFD motor 12, supplied and controlled by the said frequency converter 11, is arranged to produce a torque to the shaft of the sleeve bearing VFD motor which corresponds to said input reference of torque controller.

In the determining 22 of said control torque, the measured vibration data can be post-processed. After the control torque has been determined 22, a respective control torque for controlling vibration is generated 23 by the frequency converter 11 and said generated control torque is exerted on the stator of said sleeve bearing VFD motor 12. In the method according to the present embodiment, the steps of measuring 21 horizontal vibration of sleeve bearing VFD motor, determining 22 control torque for controlling vibration and generating 23 control torque for controlling vibration are repeated several times in a continuous loop, as deemed necessary. In the method according to another embodiment, the steps of measuring 21 horizontal vibration and vertical vibration of sleeve bearing VFD motor, determining 22 control torque for controlling vibration and generating 23 control torque for controlling vibration are repeated several times in a continuous loop, as deemed necessary.

In the method according to an embodiment, the control torque generated 23 by the frequency converter 11 is exerted on the stator of the sleeve bearing VFD motor 12. The control torque is utilized, at least, to control the vibration at the low frequency critical speed frequency area/areas for suppression of the vibration.

In the method according to an embodiment, the control torque is used as a horizontal force utilized, at least, to control the vibration and thereby to control all so-called cylindrical modes of the rotor-frame system. This can be carried out, because the sleeve bearings of said sleeve bearing VFD motor 12 break the symmetry of the system, and the motion of the bearing orbits are always tilted, i.e., there are no purely vertical modes. This means that all cylindrical modes of the rotor-frame system have horizontal bearing motion component (horizontal displacement component / horizontal velocity component) in the bearing system. Due to the reciprocity principle, this horizontal bearing motion component means that all these modes can be controlled by the reactive control torque generated 23 by the frequency converter 11 and exerted on the stator of the sleeve bearing VFD motor 12.

In the method according to an embodiment, the control torque is used for minimizing the once-per rotor revolution (1X) motion of the measured horizontal vibration. In the method according to another embodiment, the control torque is used for minimizing the once-per rotor revolution (1X) motion of the measured horizontal vibration and of the measured vertical vibration. With the help of the present invention, the vibration control is improved due to overlapping response of critical speeds. In the method according to another embodiment, relative shaft displacement sensors are utilized in determining the control torque for controlling vibration. Shaft displacement sensors are used in some sleeve bearing motors with high reliability requirements.

In the method according to an embodiment, the force of the control torque mode does not need to be in the modal shape direction in the force application position. It is true that the force is more effective, if the modal shape and force direction are parallel, but the effect can be calculated by dot product of these two vectors. In general, the modal shape or modal frequency do not change due to force of the control torque. Only the amplitude of this mode may decrease.

In the method according to an embodiment, in steady state, the once-per rotor revolution (1X) bearing response is a superposition of individual modal responses of modes close to the rotation frequency. In the calculations for determining the control torque the modes may be separated for achieving a simple control calculation.

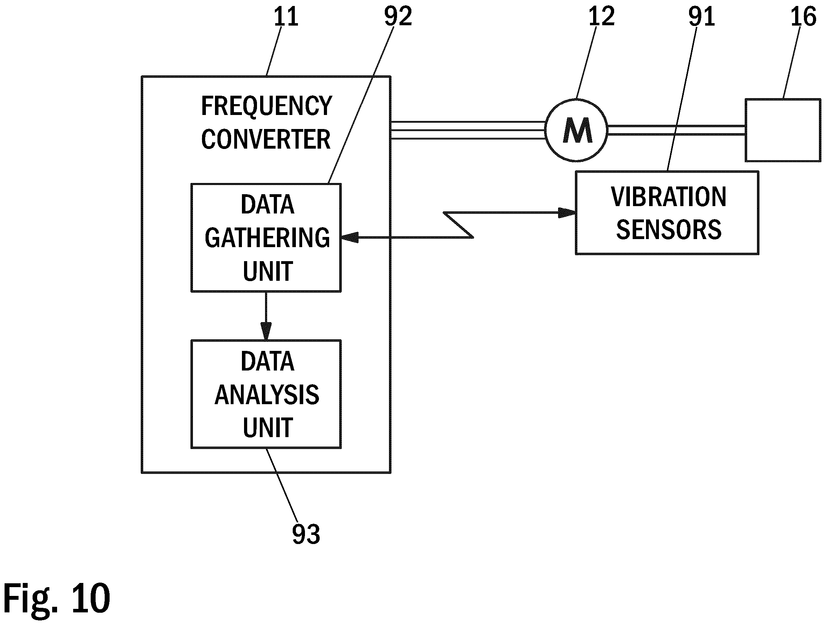

Figure 10 illustrates a block diagram of another embodiment of an arrangement for controlling vibration of a sleeve bearing VFD motor according to the present invention. The presented another embodiment of an arrangement for controlling vibration of a sleeve bearing VFD motor comprises a frequency converter 11, a sleeve bearing VFD motor 12 and a driven machine system 16 connected to said sleeve bearing VFD motor 12. The presented another embodiment of an arrangement for controlling vibration of a sleeve bearing VFD motor comprises one or more vibration sensors 91 installed on the sleeve bearing VFD motor. Whereas in the presented embodiment a driven machine 16 connected to a motor 12 is shown, in another embodiment of the present invention the driven machine system 16 could be replaced by one or more driven machine devices and/or one or more gears/ gear arrangements and/or one or more shafts/ shaft systems connected to said sleeve bearing VFD motor 12.

In presented another embodiment of an arrangement for controlling vibration of a sleeve bearing VFD motor, the vibration data gathering and analysis is implemented on the frequency converter 11. In the presented another embodiment, the frequency converter 11 comprises a data gathering unit 92 and a data analysis unit 93.

Said data gathering unit 92 gathers data related to the controlling vibration of a sleeve bearing VFD motor. Said gathered data may include measured vibration data of the sleeve bearing VFD motor. Said measured vibration data of the sleeve bearing VFD motor includes vibration data received from the vibration sensors 91. Said data gathering unit 92 of the frequency converter 11 may receive said vibration data from the vibration sensors 91 wirelessly.

The data gathering unit 92 then sends the gathered data to the data analysis unit 93. The data analysis unit 93 then analyses said gathered data and determines, according to the present disclosure, the control torque for controlling vibration of a sleeve bearing VFD motor. After said determination, the control torque is generated by the frequency converter 11 and exerted on the stator of said sleeve bearing VFD motor 12.

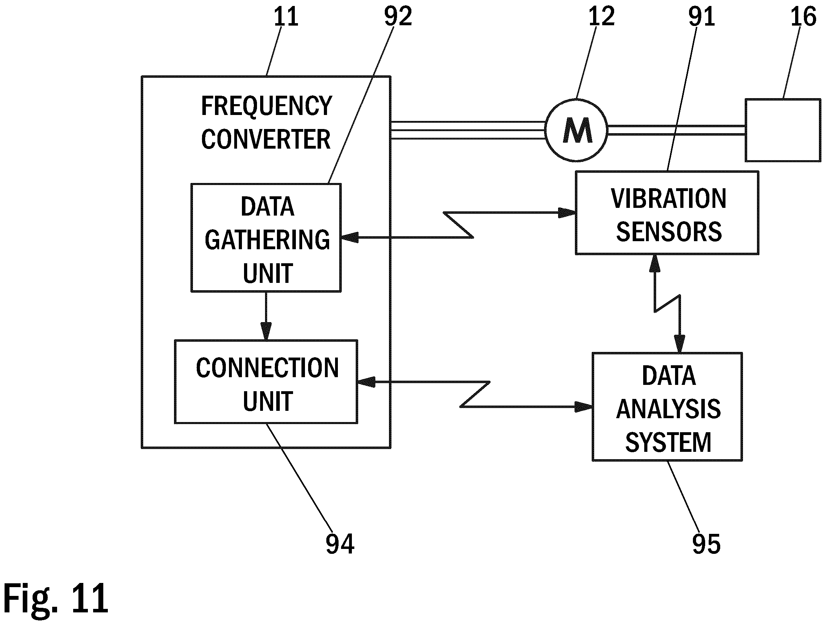

Figure 11 illustrates a block diagram of a third embodiment of an arrangement for controlling vibration of a sleeve bearing VFD motor according to the present invention. The presented third embodiment of an arrangement for controlling vibration of a sleeve bearing VFD motor comprises a frequency converter 11, a sleeve bearing VFD motor 12 and a driven machine system 16 connected to said sleeve bearing VFD motor 12. The presented third embodiment of an arrangement for controlling vibration of a sleeve bearing VFD motor comprises one or more vibration sensors 91. Whereas in the presented embodiment a driven machine 16 connected to a motor 12 is shown, in another embodiment of the present invention the driven machine system 16 could be replaced by one or more driven machine devices and/or one or more gears/ gear arrangements and/or one or more shafts/ shaft systems connected to said sleeve bearing VFD motor 12.

In presented third embodiment of an arrangement for controlling vibration of a sleeve bearing VFD motor, the vibration data analysis is implemented on an external data analysis system 95. Said external data analysis system 95 may be realized as a partially external data analysis system or as an entirely external data analysis system. In the presented third embodiment, the frequency converter 11 comprises a data gathering unit 92 and a connection unit 94.

Said data gathering unit 92 gathers data related to the controlling vibration of a sleeve bearing VFD motor. Said gathered data may include measured vibration data of the sleeve bearing VFD motor. Said measured vibration data of the sleeve bearing VFD motor includes vibration data received from the vibration sensors 91. Said data gathering unit 92 of the frequency converter 11 may receive said vibration data from the vibration sensors 91 wirelessly.

The data gathering unit 92 then forwards said gathered data to the connection unit 94. The connection unit 94 is arranged to receive said gathered data from the data gathering unit 92 and to transmit said gathered data to said data analysis system 95.

The data analysis system 95 is arranged to receive said gathered data from the connection unit 94 of the frequency converter 11. The data analysis system 95 may be implemented in a computer. Said computer may be a laptop, a desktop computer, or a cluster of computer servers, for example. The connection unit 94 may connect to said computer via one or more known communication networks, such as Ethernet, for example. The data analysis system 95 may also receive said measured vibration data directly from the vibration sensors 91. The data analysis system 95 then analyses said gathered data and determines, according to the present disclosure, the control torque for controlling vibration of a sleeve bearing VFD motor. After said determination, the frequency converter 11 is instructed to generate the control torque. Thereafter, the control torque is generated by the frequency converter 11 and exerted on the stator of said sleeve bearing VFD motor 12.

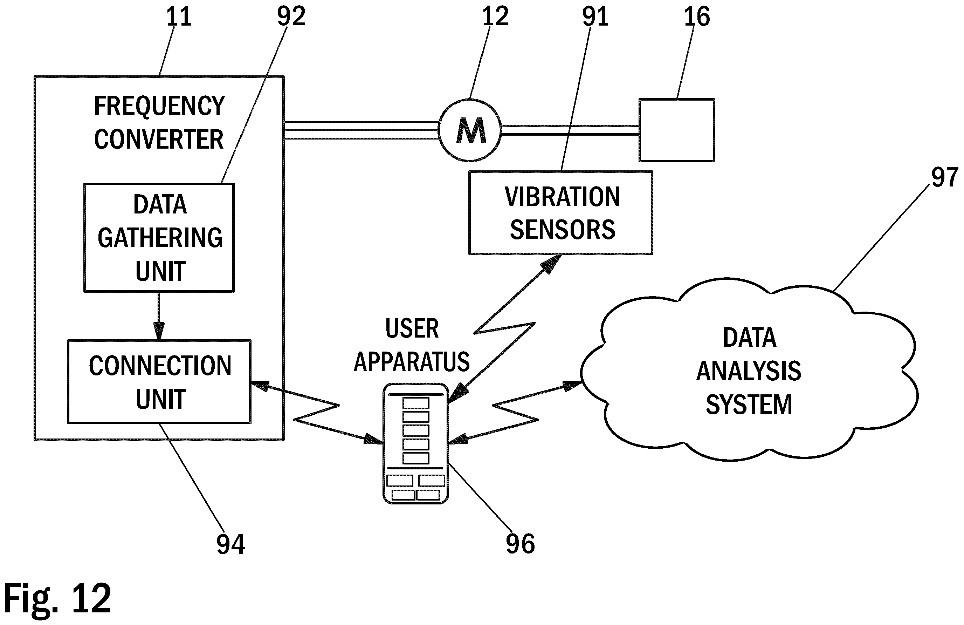

Figure 12 illustrates a block diagram of a fourth embodiment of an arrangement for controlling vibration of a sleeve bearing VFD motor according to the present invention. The presented fourth embodiment of an arrangement for controlling vibration of a sleeve bearing VFD motor comprises a frequency converter 11, a sleeve bearing VFD motor 12, a driven machine system 16 connected to said sleeve bearing VFD motor 12, a user apparatus 96 and an external data analysis system 97. The presented fourth embodiment of an arrangement for controlling vibration of a sleeve bearing VFD motor comprises one or more vibration sensors 91. In the presented fourth embodiment said external data analysis system 97 is implemented as an external cloud computing service. Whereas in the presented embodiment a driven machine 16 connected to a motor 12 is shown, in another embodiment of the present invention the driven machine system 16 could be replaced by one or more driven machine devices and/or one or more gears/ gear arrangements and/or one or more shafts/ shaft systems connected to said sleeve bearing VFD motor 12.

In presented fourth embodiment of an arrangement for controlling vibration of a sleeve bearing VFD motor, the vibration data analysis is implemented on an external data analysis system 97. Said external data analysis system 97 may be realized as a partially external data analysis system or as an entirely external data analysis system. In the presented fourth embodiment, the frequency converter 11 comprises a data gathering unit 92 and a connection unit 94.

Said data gathering unit 92 gathers data related to the controlling vibration of a sleeve bearing VFD motor. Said gathered data may include measured vibration data of the sleeve bearing VFD motor. Said measured vibration data of the sleeve bearing VFD motor includes vibration data received from the vibration sensors 91. Said data gathering unit 92 of the frequency converter 11 may receive said vibration data from the vibration sensors 91 wirelessly.

The data gathering unit 92 then forwards said gathered data to the connection unit 94. The connection unit 94 is arranged to receive said gathered data from the data gathering unit 92 and to transmit said gathered data to said data analysis system 97 via said user apparatus 96. So first, the connection unit 94 receives said gathered data from the data gathering unit 92 and transmits said gathered data to said user apparatus 96.

The connection unit 94 is configured to establish a connection with said user apparatus 96. The connection unit 94 may communicate with said user apparatus 96 via standard wireless communication protocols, for example. The connection unit 94 may establish the communication link via Bluetooth, ZigBee, near field communication (NFC), or infrared protocols, for example.

The user apparatus 96 may be a handheld communication device, such as a smart phone or a tablet computer. The user apparatus 96 may be arranged to receive said gathered data from the connection unit 94 of the frequency converter 11 and to forward said gathered data to said external data analysis system 97. Said external data analysis system 97 may be implemented as an external cloud computing service. The user apparatus 96 may be arranged to communicate with said external data analysis system 97 through wireless networks, such as cell phone networks or WLAN.

The data analysis system 97 is arranged to receive said gathered data from the user apparatus 96. The data analysis system 97 may also be arranged to receive user input from the user apparatus 96. The data analysis system 97 then analyses said gathered data and determines, according to the present disclosure, the control torque for controlling vibration of a sleeve bearing VFD motor. After said determination, the frequency converter 11 is instructed to generate the control torque. Thereafter, the control torque is generated by the frequency converter 11 and exerted on the stator of said sleeve bearing VFD motor 12.

With the help of the method, the arrangement and the frequency converter for controlling vibration of a sleeve bearing VFD motor according to the present invention, the use of a sleeve bearing VFD motor in at least some critical speeds is enabled. Also the solution according to the present invention enables super-critical design of a sleeve bearing VFD motor.

With the help of the solution according to the present invention the vibration of a sleeve bearing VFD motor can be controlled so that a broader use of a sleeve bearing VFD motor is enabled.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.


**Claims**

**1.** A method for controlling vibration of a sleeve bearing VFD motor (12), in which method:

- at least horizontal vibration from said sleeve bearing VFD motor is measured (21) by one or more vibration sensors (17-18, 91) as measured vibration data, said one or more vibration sensors (17-18, 91) comprising one or more vibration sensors (17-18, 91) of said sleeve bearing VFD motor (12);
- control torque is determined (22) utilizing said measured vibration data; and
- control torque is generated (23) by said frequency converter (11) and exerted on the stator of said sleeve bearing VFD motor (12) for controlling vibration of said sleeve bearing VFD motor (12).

2. A method according to claim 1, wherein horizontal vibration and vertical vibration from said sleeve bearing VFD motor is measured (21) by one or more vibration sensors (17-18, 91) as measured vibration data.

3. A method according to claim 1 or to claim 2, wherein in generating (23) said control torque:

- a control torque reference is calculated by said frequency converter (11); and
- control torque is generated (23) by said frequency converter (11) corresponding to said control torque reference.

4. A method according to any of the claims 1-3, wherein said measured vibration data is utilized for suppression of vibration of said sleeve bearing VFD motor (12) at least at the low frequency critical speed frequency area/areas.

5. An arrangement for controlling vibration of a sleeve bearing VFD motor, said arrangement comprising a frequency converter (11), one or more vibration sensors (17-18, 91) and a sleeve bearing VFD motor (12), said one or more vibration sensors (17-18, 91) comprising one or more vibration sensors (17-18, 91) of said sleeve bearing VFD motor (12),

- wherein said one or more vibration sensors (17-18, 91) is/are arranged for measuring at least horizontal vibration from said sleeve bearing VFD motor and for producing measured vibration data; and
- wherein said frequency converter (11) is arranged for generating a control torque and for exerting said control torque on the stator of said sleeve bearing VFD motor (12) for controlling vibration of said sleeve bearing VFD motor (12), said control torque being determined utilizing said measured vibration data.

6. An arrangement according to claim 5, wherein said one or more vibration sensors (17-18, 91) is/are arranged for measuring horizontal vibration and vertical vibration from said sleeve bearing VFD motor and for producing measured vibration data.

7. An arrangement according to claim 5 or to claim 6, wherein in generating said control torque:

- a control torque reference is calculated by said frequency converter (11); and
- control torque is generated by said frequency converter (11) corresponding to said control torque reference.

8. An arrangement according to any of the claims 5-7, wherein said measured vibration data is utilized for suppression of vibration of said sleeve bearing VFD motor (12) at least at the low frequency critical speed frequency area/areas.

9. An arrangement according to any of the claims 5-8, wherein said frequency converter (11) comprises:

- a data gathering unit (92) arranged for gathering data, said gathered data including control data for said sleeve bearing VFD motor (12) and measured vibration data of said sleeve bearing VFD motor; and
- a data analysis unit (93) arranged for analysing said gathered data and for determining the control torque for controlling vibration of said sleeve bearing VFD motor.

10. An arrangement according to any of the claims 5-8, wherein said arrangement comprises a data analysis system (95, 97), and wherein said frequency converter (11) comprises:

- a data gathering unit (92) arranged for gathering data, said gathered data including control data for said sleeve bearing VFD motor (12) and measured vibration data of said sleeve bearing VFD motor; and
- a connection unit (94) arranged for transmitting said gathered data to said data analysis system (95, 97),
- wherein said data analysis system (95, 97) is arranged for analysing said gathered data and for determining the control torque for controlling vibration of said sleeve bearing VFD motor.

11. An arrangement according to claim 10, wherein said arrangement comprises a user apparatus (96), and

- wherein said connection unit (94) arranged for transmitting said gathered data to said data analysis system (95, 97) via said user apparatus (96), and

- wherein said user apparatus (96) is arranged for receiving measured vibration data of said sleeve bearing VFD motor from said one or more vibration sensors (17-18, 91) and for receiving said gathered data from said connection unit (94) and for forwarding said gathered data to said data analysis system (95, 97).

12. A frequency converter (11) for controlling vibration of a sleeve bearing VFD motor (12), which frequency converter (11) is arranged:

- to receive vibration data from one or more vibration sensors (17-18, 91) arranged for measuring at least horizontal vibration from said sleeve bearing VFD motor and for producing measured vibration data, said one or more vibration sensors (17-18, 91) comprising one or more vibration sensors (17-18, 91) of said sleeve bearing VFD motor (12); and
- to generate a control torque for exerting said control torque on the stator of said sleeve bearing VFD motor (12) for controlling vibration of said sleeve bearing VFD motor (12), said control torque being determined utilizing said measured vibration data.

13. A frequency converter (11) according to claim 12, wherein said one or more vibration sensors (17-18, 91) is/are arranged for measuring horizontal vibration and vertical vibration from said sleeve bearing VFD motor and for producing measured vibration data.

14. A frequency converter (11) according to claim 12 or to claim 13, wherein in generating said control torque:

- a control torque reference is calculated by said frequency converter (11); and
- control torque is generated by said frequency converter (11) corresponding to said control torque reference.

15. A frequency converter (11) according to any of the claims 12-14, comprising:

- a data gathering unit (92) arranged for gathering data, said gathered data including control data for said sleeve bearing VFD motor (12) and measured vibration data of said sleeve bearing VFD motor; and
- a data analysis unit (93) arranged for analysing said gathered data and for determining the control torque for controlling vibration of said sleeve bearing VFD motor.

**Fig. 1**

Non-drive end

Drive end

Fig. 2

PHASE [DEG]

**33**        **34**   **31**      **32**

180
120
60
0
-60
-120
-180

      1000     2000     3000     4000    SPEED
                                                      [RPM]

## Fig. 3A

VIBR. VELOCITY
[mm/s RMS]

**44**        **41**   **42**    **43**

5.0
4.0
3.0
2.0
1.0
0

      1000     2000     3000     4000    SPEED
                                                      [RPM]

## Fig. 3B

Fig. 4

Fig. 5

Fig. 6

Fig. 7A

Fig. 7B

Fig. 8A

Fig. 8B

START

MEASURING HORIZONTAL
AND VERTICAL VIBRATION OF
SLEEVE BEARING VFD MOTOR — 21

DETERMINING
CONTROL TORQUE FOR
CONTROLLING VIBRATION — 22

GENERATING
CONTROL TORQUE FOR
CONTROLLING VIBRATION — 23

END

Fig. 9

Fig. 10

Fig. 11

EP 4 738 692 A1

Fig. 12

EP 4 738 692 A1

## EUROPEAN SEARCH REPORT

**Application Number**

EP 24 21 0508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 120 558 A1 (ABB SCHWEIZ AG [CH]) 18 January 2023 (2023-01-18) * abstract; figures 1-8 * * paragraph [0005] - paragraph [0072] * ----- | 1-15 | INV. H02P21/05 H02P23/04 |
| A | HOLOPAINEN TIMO P ET AL: "Ensuring the Low Vibration of Two-Pole Motors on Flexible Foundations: A Manufacturer-System Integrator Collaboration", IEEE INDUSTRY APPLICATIONS MAGAZINE, IEEE SERVICE CENTER, PISCATAWAY, NJ, US, vol. 26, no. 6, 1 November 2020 (2020-11-01), pages 20-28, XP011814752, ISSN: 1077-2618, DOI: 10.1109/MIAS.2020.2982708 [retrieved on 2020-10-12] * figures 1-5; tables 1-2 * * page 21 - page 27 * ----- | 1-15 | |

**TECHNICAL FIELDS SEARCHED (IPC)**

H02P

The present search report has been drawn up for all claims

| Place of search | Date of completion of the search | Examiner |
|---|---|---|
| Munich | 23 April 2025 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 21 0508

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | | Publication date | Patent family member(s) | | Publication date |
|---|---|---|---|---|---|
| EP 4120558 | A1 | 18-01-2023 | EP | 4120558 A1 | 18-01-2023 |
| | | | US | 2023017735 A1 | 19-01-2023 |

EPO FORM P0459

For more details about this annex : see Official Journal of the European Patent Office, No. 12/82